# DEMANDE DE BREVET EUROPEEN

(11) **EP 3 406 157 A1**
(43) Date de publication de la demande: **28.11.2018**
(21) Numéro de dépôt: 17173152.4
(22) Date de dépôt: 26.05.2017
(51) Int. Cl.: A44C 27/00, C03C 14/00, G04B 19/12

(54) **PIÈCE DÉCORATIVE ÉMAILLÉE ET PROCÉDÉS DE FABRICATION**

(71) Demandeur: GT Cadrans SA, 1027 Lonay (CH)
(72) Inventeur: Meyer, Christophe, 2300 La Chaux-de-Fonds (CH)
(74) Mandataire: BOVARD AG

(57) **Abrégé**

La présente invention concerne une pièce décorative émaillée, destinée notamment à l'horlogerie, à la bijouterie ou à la joaillerie. Cette pièce décorative émaillée comprend un substrat (1) ayant une face supérieure (2) et une face inférieure (3),
au moins une première cloison (4) faisant saillie depuis la face supérieure (2) et formant une boucle entourant un premier émail (5), et
au moins une deuxième cloison (6) faisant saillie depuis la face supérieure (2) et formant une boucle entourant un second émail (7) différent du premier émail,
et elle se distingue en ce que le second émail (7) comprend des particules de matériau minéral.

La présente invention a également trait à des procédés de fabrication d'une pièce décorative émaillée.

## Description

### Domaine technique de l'invention

La présente invention concerne une pièce décorative émaillée, destinée notamment à l'horlogerie, à la bijouterie ou à la joaillerie, ainsi que des procédés de fabrication d'une telle pièce.

### Arrière-plan de l'invention

La demande de brevet européen publiée sous le numéro EP 1 734 018 propose en particulier des pièces à usage technique et/ou décoratif comprenant un substrat transparent pourvu sur des faces opposées de couches d'émail (cf. Fig. 7). La superposition des couches d'émail permet d'obtenir un mélange des couleurs des émaux.

La demande de brevet européen numéro EP 3 035 130 a pour objet un procédé de réalisation d'un élément décoré d'une pièce d'horlogerie ou de bijouterie. Cet élément comprend un substrat sur une face duquel sont réalisées des cloisons décoratives qui sont ensuite remplies d'un émail.

### Exposé sommaire de l'invention

Le but majeur de l'invention est de proposer une pièce décorative émaillée ayant un aspect différent des pièces connues jusqu'à ce jour.

Ce but est atteint par une pièce décorative comprenant un substrat ayant une face supérieure et une face inférieure,
au moins une première cloison faisant saillie depuis la face supérieure et formant une boucle entourant un premier émail, et
au moins une deuxième cloison faisant saillie depuis la face supérieure et formant une boucle entourant un second émail différent du premier émail,
et cette pièce décorative émaillée se distinguant en ce que le second émail comprend des particules de matériau minéral.

Normalement, la face supérieure du substrat de la pièce décorative est dédiée à la décoration et la face inférieure au contre-émaillage.

L'invention concerne également des procédés de préparation d'une pièce émaillée décorative.

Ces procédés ont l'avantage de permettre d'obtenir des pièces décoratives émaillées qui sont uniques, car chacune est visuellement différente des autres.

### Brève description des figures

D'autres caractéristiques et avantages de la présente invention vont maintenant être décrits en détail dans l'exposé suivant qui est donné en référence aux figures annexées, lesquelles représentent schématiquement :
- figure 1 : une pièce décorative émaillée selon l'invention sans les émaux, en vue de dessus ; et
- figure 2 : une coupe selon A-A de la pièce décorative émaillée de la figure 1, avec les émaux.

### Exposé détaillé de l'invention

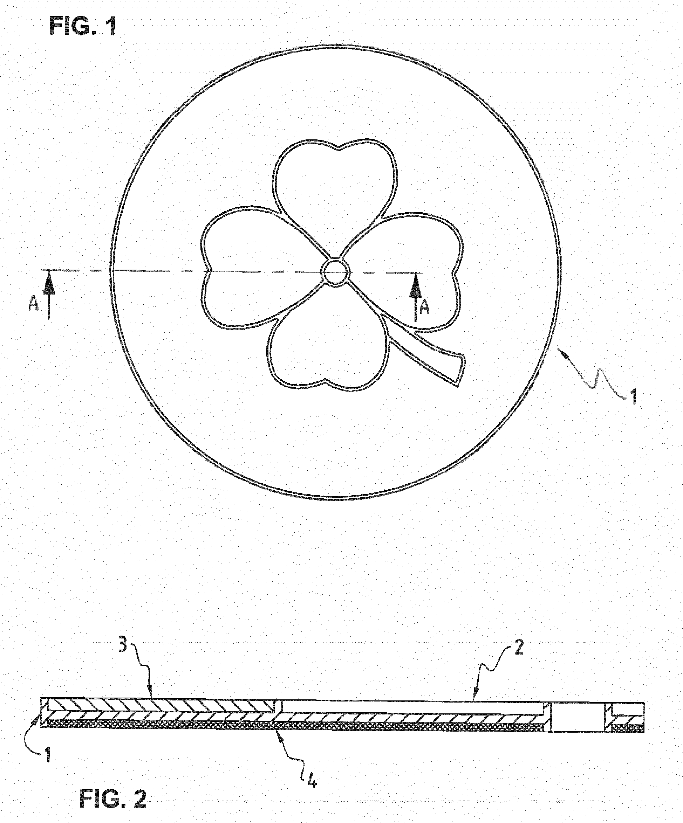

Un exemple de réalisation de la pièce décorative émaillée selon la présente invention est représenté sur les figures 1 et 2. Il s'agit d'un cadran de montre. Bien entendu, cette illustration n'est qu'un mode de réalisation de la présente invention et ne doit pas être compris de manière limitative. Il va de soi que d'autres pièces décoratives correspondant à la présente invention peuvent être réalisées.

Comme on peut le voir sur ces deux figures, le cadran comprend un substrat 1 présentant globalement la forme d'une plaque ou d'un disque et ayant une face supérieure 2 et une face inférieure 3.

Une première cloison 4 fait saillie depuis la face supérieure 2 et forme une boucle, pas obligatoirement fermée, entourant ou contenant un premier émail 5.

D'autres cloisons 6 font également saillies depuis la face supérieure 2 et forment des boucles, pas obligatoirement fermées, entourant ou contenant au moins un second émail 7 différent du premier émail 5.

De préférence, la ou les boucles formées par la ou les cloisons 6 se trouvent à l'intérieur de la ou des boucles formées par la ou les cloisons 4.

Selon la présente invention, ce second émail 7 comprend des particules de matériau minéral symbolisées sur la figure 2 par des points noirs. Ce matériau minéral peut par exemple être de la pierre sous forme de poudre.

Bien entendu, on peut utiliser des particules provenant de plusieurs matériaux minéraux différents et l'émail 5 peut être un émail comprenant un matériau minéral lorsque l'émail 7 en est dépourvu.

Comme matériaux minéraux utilisables, on peut notamment citer le lapis-lazuli, l'agate, l'améthyste, le rubis, la jade et l'oeil-de-tigre.

En général, les particules de matériau minéral ont une taille comprise entre 0.15 et 0.50 mm.

Pour ce qui est de la teneur, le second émail 7 comprend généralement de 5 % à 50 % de particules de matériau minéral par rapport à sa masse totale.

Quant au substrat 1, il est généralement constitué d'un métal compatible avec l'émail, tel que par exemple l'or, l'argent ou le cuivre.

Selon un mode de réalisation de l'invention, la pièce décorative selon l'invention comprend au moins une troisième cloison 8, visible sur la figure 2, qui fait saillie depuis la face inférieure 3 et forme une boucle entourant ou contenant un contre-émail 9.

De préférence, le contre-émail 9 se situe essentiellement en correspondance avec les premier et second émaux 5, 7, de manière à rigidifier le substrat et à s'opposer aux tensions qui se créent dans le substrat lors des cuissons successives.

### Procédés de fabrication

La pièce décorative émaillée selon la présente invention peut être fabriquée en mettant en oeuvre des techniques connues de l'homme du métier.

Lorsque le substrat est métallique, les cloisons 4, 6 et 8 peuvent être des évidements obtenus par usinage, c'est-à-dire par creusement dans la surface d'une plaque, comme expliqué notamment au paragraphe [0014] de la demande de brevet européen n° EP 1 734 018 précitée.

Les cloisons 4,6 et 8 peuvent aussi être réalisées par frittage sélectif ou fusion sélective comme indiqué par exemple aux paragraphes [0021] à [0028] de la demande de brevet européen n° EP 3 035 130 précitée ainsi que par pose de fils de métal préalablement formés et délicatement posés à la main.

Les espaces situés dans les boucles formées par les cloisons 4, 6 et 8 peuvent ensuite être remplis d'émail de façon connue.

La nature chimique et la composition des émaux utilisés sont bien connues de l'homme du métier.

Une des particularités du procédé de fabrication selon la présente invention est le fait que l'on introduit à l'intérieur de la boucle formée par la cloison 6 un émail 7 contenant des particules de matériau minéral dont la température de fusion ou de décomposition est égale à celle de l'émail 7, de manière à ce qu'elles ne se dissolvent pas dans l'émail. Il va de soi qu'elles ne doivent pas non plus interagir chimiquement avec l'émail 7.

Suivant une variante, on peut d'abord introduire à l'intérieur de la boucle formée par la cloison 6, un émail puis on ajoute à cet émail, avant sa solidification, les particules de matériau minéral.

La présente invention peut également être mise à profit pour fabriquer une série de pièces décoratives selon l'invention, chaque pièce décorative ayant une teinte différente des autres. Pour cela, on utilise le même émail chargé de particules de matériau minéral, mais on modifie la teneur en particules de matériau minéral lorsque l'on passe d'une pièce à l'autre. L'émail 7 chargé en particules obtenu après solidification est ainsi différent d'une pièce décorative émaillée à l'autre.

Par ailleurs, pour une même teneur en particules de matériau minéral, en jouant sur la taille des particules, on peut viser l'obtention d'effets visuels différents, voire de reliefs différents, à la surface visible de l'émail 7.

Ces effets visuels et reliefs différents peuvent aussi être obtenus en employant des particules qui proviennent de matériaux minéraux différents, ayant des aspects différents, par exemple des couleurs et/ou des facettes et/ou des reflets et/ou des tailles différents qui sont par exemple obtenus par un broyage plus ou moins fin ou grossier des pierres.

On note également que pour une même taille de particules et une même teneur en particules, sous réserve que celles-ci aient des valeurs appropriées, on peut obtenir des pièces décoratives émaillées différentes l'une de l'autre. En effet, des particules de matériau minéral se placent de manière aléatoire au niveau de la face supérieure de l'émail 7, provoquant ainsi des effets visuels différents.

On peut donc considérer que l'invention permet d'obtenir des pièces décoratives émaillées qui sont uniques car les emplacements qu'occupent les particules au niveau de la face visible de l'émail 7 sont aléatoires.

Bien sûr, la présente invention avec ces différents aspects est sujette à de nombreuses variations quant à sa mise en oeuvre. Bien que plusieurs modes de réalisations aient été décrits, on comprend facilement qu'il n'est pas concevable d'identifier de manière exhaustive tous les modes possibles. Il est donc bien sûr envisageable de remplacer un moyen décrit par un moyen équivalent ou de combiner différents moyens décrits sans sortir du cadre de la présente invention.

## Revendications

1. Pièce décorative émaillée comprenant un substrat (1) ayant une face supérieure (2) et une face inférieure (3),
au moins une première cloison (4) faisant saillie depuis la face supérieure (2) et formant une boucle entourant un premier émail (5), et
au moins une deuxième cloison (6) faisant saillie depuis la face supérieure (2) et formant une boucle entourant un second émail (7) différent du premier émail,
cette pièce décorative étant **caractérisée en ce que** le second émail (7) comprend des particules de matériau minéral.

2. Pièce décorative selon la revendication 1, dans laquelle les particules de matériau minéral comprennent de la poudre de pierre.

3. Pièce décorative selon la revendication 1 ou 2, dans laquelle les particules de matériau minéral ont une taille comprise entre 0.15 et 0.50 mm.

4. Pièce décorative selon l'une des revendications 1 à 3, dans laquelle le second émail (7) comprend de 5 % à 50% de particules de matériau minéral par rapport à la masse totale du second émail (7).

5. Pièce décorative selon l'une des revendications 1 à 4, dans laquelle les particules proviennent de plusieurs matériaux minéraux différents.

6. Pièce décorative selon la revendication 5, dans laquelle les matériaux minéraux sont choisis parmi des pierres décoratives, telles que jades, lapis-lazuli, rubis, agates, oeils-de-tigre.

7. Pièce décorative selon l'une des revendications 1 à 6, dans laquelle le substrat (1) est essentiellement constitué d'un métal, en particulier de l'or.

8. Pièce décorative selon l'une des revendications 1 à 7, dans laquelle la ou les boucles formées par la ou les cloisons (6) se trouvent à l'intérieur de la ou des boucles formées par la ou les cloisons (4).

9. Pièce décorative selon l'une des revendications 1 à 8, comprenant au moins une troisième cloison (8) faisant saillie depuis la face inférieure (3) et formant une boucle entourant un contre-émail (9).

10. Pièce décorative selon la revendication 9, dans laquelle le contre-émail (9) se situe essentiellement en correspondance avec les premier (5) et second (7) émaux.

11. Procédé de fabrication d'une pièce décorative, comprenant une étape consistant à introduire, à l'intérieur d'une boucle formée par une cloison (6) faisant saillie depuis un substrat (1), un émail (7) comprenant des particules de matériau minéral.

12. Procédé de fabrication d'une pièce décorative, dans lequel on introduit un émail (7) à l'intérieur d'une boucle formée par une cloison (6) faisant saillie depuis un substrat (1), puis on introduit dans cet émail (7), avant sa solidification, des particules de matériau minéral.

13. Procédé de fabrication d'une série de pièces décoratives comportant un émail (7) chargé de particules de matériau minéral, chaque pièce décorative ayant une teinte différente des autres, dans lequel on utilise le même émail (7) chargé des mêmes particules de matériau minéral, mais on modifie la teneur en ces particules de matériau minéral lorsque l'on passe d'une pièce à l'autre.
